# EUROPEAN PATENT APPLICATION

(11) **EP 4 539 172 A1**
(43) Date of publication of application: **16.04.2025**
(21) Application number: 23823613.7
(22) Date of filing: 22.05.2023
(51) Int. Cl.: H01M 6/02, H01M 6/16, H01M 50/586, H01M 50/595

(54) **LITHIUM PRIMARY BATTERY**

(30) Priority: 13.06.2022 JP 2022095254
(71) Applicant: Panasonic Intellectual Property Management Co., Ltd., Kadoma-shi, Osaka 571-0057 (JP)
(72) Inventor: ANDO, Keita, Kadoma-shi, Osaka 571-0057 (JP); NISHIMURA, Naoaki, Kadoma-shi, Osaka 571-0057 (JP)
(74) Representative: Novagraaf International SA
(86) International application number: PCT/JP2023/018865
(87) International publication number: WO 2023/243312

(57) **Abstract**

A lithium primary cell includes an electrode body which includes positive and negative electrodes spirally wound together via a separator, a negative-electrode lead electrically connected to and partly covering the negative electrode, and a protective tape partly covering the negative-electrode lead and being wider than the negative-electrode lead. An outermost turn of the electrode body constitutes the positive electrode. The negative electrode is wound more than two turns in the electrode body. The negative-electrode lead is disposed neither on an innermost turn nor an outermost turn of the negative electrode. Straight lines A, B, and C are defied on a cross-section of the electrode body perpendicular to a center-axis thereof. The straight line A passes through the center axis and a center of the protective tape. The second straight line is parallel with the straight line A and passes through one end of the protective tape. The straight line C is parallel with the first straight line and passes through another end of the protective tape. An end of an outermost turn of the positive electrode is located in a region of the cross section provided between the straight lines B and C. A designed energy density of the cell is 850 Wh/L or more.

## Description

### TECHNICAL FIELD

The present disclosure relates to a lithium primary cell.

### BACKGROUND ART

Electronic devices powered by lithium primary cells have been used in an increasingly wider range of applications. Such devices tend to employ lithium primary cells for long-term operations. A lithium primary cell includes a negative electrode made of a foil (hereinafter, referred to as a negative-electrode foil) made of metal lithium or lithium alloy. The negative foil functions as both a negative-electrode active material and a negative-electrode collector.

As a discharge reaction proceeds, regions of the foil where lithium has been fully exhausted and other regions of the foil where lithium remains are produced. When the regions where lithium remains are isolated by the regions where lithium has been fully exhausted, the lithium in the isolated regions is electrically disconnected from a negative-electrode lead, thereby being prevented from contributing to discharge. This configuration accordingly decreases an actual cell capacity of the cell to less than a designed capacity.

In a lithium primary cell including an electrode body including positive and negative electrodes spirally wound, the reaction of the negative-electrode foil may become non-uniform, resultingly causing an uneven reaction. A large pressure is applied particularly to an outer end of the positive electrode on the winding-end side thereof decreases a distance between the positive and negative electrodes, and facilitates a discharge reaction in a radial direction of the electrode body from the outer end of the positive electrode. This may cause a foil breakage, i.e., a disconnection of the negative-electrode foil.

PTL 1 proposes the following configuration for improving a non-aqueous electrolyte cell. The non-aqueous electrolyte cell includes an electrode body including a strip-shaped negative electrode with light metal as an active material and a strip-shaped positive electrode wound spirally together via a separator between the electrodes. The negative electrode has a width equal to or smaller than that of the positive electrode, and includes a negative-electrode collector tab crimped to the negative electrode with the tab covering not all the surface of the negative electrode in a longitudinal direction. In the proposed configuration, the negative-electrode collector tab is disposed within a semicircle of 180° in the winding direction from the end of the positive electrode of the electrode body, thereby allowing a uniform consumption of the light metal of the negative-electrode during discharging.

### CITATION LIST

### Patent Literature

PTL 1: Japanese Utility Model Publication No. 06-6462

### SUMMARY OF INVENTION

As pursuing higher energy densities of cells, the electrode disclosed in PTL 1 is not sufficient for implementing a cell having a high energy density (e.g., 850 Wh/L or more), possibly resulting in unpreventable foil breakages.

A lithium primary cell according to an aspect of the present disclosure includes an electrode body including positive and negative electrodes spirally wound together via a separator interposed therebetween, a negative-electrode lead attached on the negative electrode, the negative-electrode lead covering a part of the negative electrode and being electrically connected to the negative electrode, and a protective tape covering a part of the negative-electrode lead and being wider than the negative-electrode lead. An outermost turn of the electrode body constitutes the positive electrode. The negative electrode is wound more than two turns in the electrode body. The negative-electrode lead is disposed neither on the innermost turn of the negative electrode nor on the outermost turn of the negative electrode. A straight lines A, B, and C are defined on a cross section of the electrode body perpendicular to a center axis of the electrode body. The straight line A passes through the center axis and a center X of the protective tape. The straight line B is parallel with the straight line A and passes through one end of the protective tape. The straight line C is parallel with the straight line A and passes through another end of the protective tape. An end of an outermost turn of the positive electrode is located in a region of the cross section between straight lines B and C. A designed energy density of the lithium primary cell is 850 Wh/L or more.

### ADVANTAGEOUS EFFECT OF INVENTION

According to the present disclosure, even having a high energy density of 850 Wh/L or more, the lithium primary cell is prevented from suffering foil breakages of the negative electrode in a terminal stage of discharge, accordingly increasing a negative-electrode utilization rate of the cell.

### BRIEF DESCRIPTION OF DRAWINGS

FIG. 1A is a schematic cross-sectional view of a lithium primary cell according to an exemplary embodiment of the present disclosure.
FIG. 1B is a schematic cross-sectional view of an electrode body of the lithium primary cell according to the embodiment of the present disclosure.
FIG. 2A is a schematic view of an example of a negative electrode of the lithium primary cell according to the embodiment of the present disclosure.
FIG. 2B is a schematic view of the example of the negative electrode of the lithium primary cell according to the embodiment of the present disclosure.
FIG. 2C is a schematic cross-sectional view of another example of the electrode body of the lithium primary cell according to the embodiment of the present disclosure.
FIG. 2D is a schematic view of an example of the negative electrode of the lithium primary cell according to the embodiment of the present disclosure.
FIG. 3 is a schematic view of an example of the negative electrode of the lithium primary cell according to the embodiment of the present disclosure.
FIG. 4 is a table showing an evaluation result of the lithium primary cell according to the embodiment of the present disclosure.

### DESCRIPTION OF EMBODIMENTS

Exemplary embodiments of sealed cells according to the present disclosure will be described below by way of examples, but the present disclosure is not limited to the examples described below. In the following description, specific numerical values and specific materials nay be exemplified, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when multiple lower and multiple upper limits of numerical values related to specific physical properties, conditions, etc. are mentioned as examples, any one of the mentioned multiple lower limits and any one of the mentioned multiple upper limits can be combined in any combination as long as the lower limit is not equal to or more than the upper limit. In the case of a plurality of materials being exemplified, one kind of them may be selected and used singly, or two or more kinds may be used in combination.

Moreover, the present disclosure encompasses a combination of matters recited in any two or more claims selected from multiple claims in the appended claims. In other words, as long as no technical contradiction arises, matters recited in any two or more claims selected from the multiple claims in the appended claims can be combined.

Hereinafter, specific exemplary embodiments according to the present disclosure will be described with reference to the accompanying drawings. However, the embodiments are not limited to these examples. Note that, in the following illustrated examples, components having the same functions are denoted by the same reference numerals.

### Lithium Primary Cell

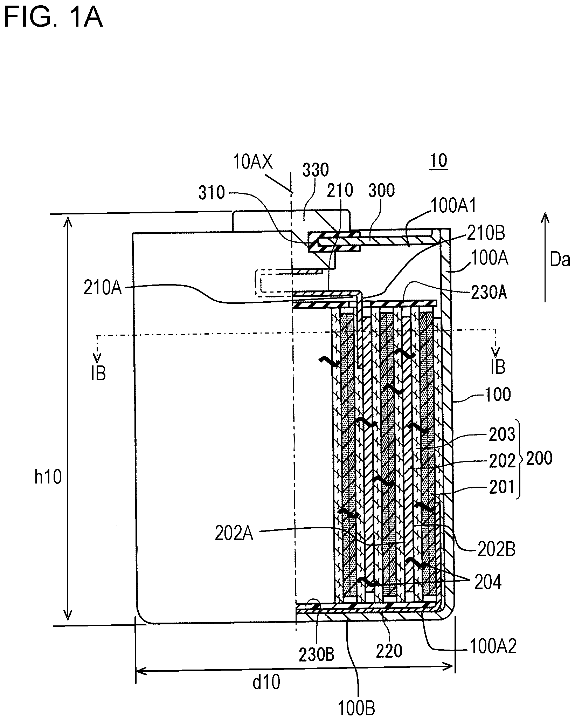

FIG. 1A is a front view of lithium primary cell 10 according to an exemplary embodiment of the present disclosure with partially showing a cross section thereof.

Lithium primary cell 10 includes cell can 100 having a cylindrical shape with a bottom, wound electrode body 200 accommodated in cell can 100, and sealing plate 300 closing opening 100A1 of cell can 100. Cell can 100 includes cylindrical portion 100A having openings 100A1 and 100A2 opposite to each other and bottom portion 100B closing opening 100A2. Sealing plate 300 is secured, by welding, in the vicinity of opening 100A1 of cell can 100. Sealing plate 300 has an opening at a center thereof. External terminal 330 is disposed in the opening. Insulative gasket 310 is disposed between external terminal 330 and sealing plate 300. Electrode body 200 and non-aqueous electrolyte 204 is accommodated in cell can 100. For preventing internal short circuits, upper insulating plate 230A and lower insulating plate 230B are disposed in upper and lower portions of electrode body 200, respectively. That is, upper insulating plate 230A is disposed between sealing plate 300 and electrode body 200 while lower insulating plate 230B is disposed between bottom portion 100B of cell can 100 and electrode body 200.

Electrode body 200 includes positive electrode 201 with a sheet shape, negative electrode 202 with a sheet shape, and separator 203 with a sheet shape that are wound spirally about center axis 10AX such that positive electrode 201 and negative electrode 202 are laminated on each other via separator 203 interposed between the electrodes. Negative electrode 202 has inner circumferential surface 202A and outer circumferential surface 202B opposite to inner circumferential surface 202A. Inner circumferential surface 202A faces center axis 10AX of electrode body 200. Outer circumferential surface 202B faces the outside of electrode body 200. Internal lead 210 (negative-electrode lead) is connected to negative electrode 202. In accordance with the embodiment, internal lead 210 is connected to inner circumferential surface 202A of negative electrode 202. Internal lead 210 is connected to external terminal 330 by, e.g., welding. Another internal lead 220 is connected to positive electrode 201. Internal lead 220 is connected to an inner surface of cell can 100 by, e.g., welding.

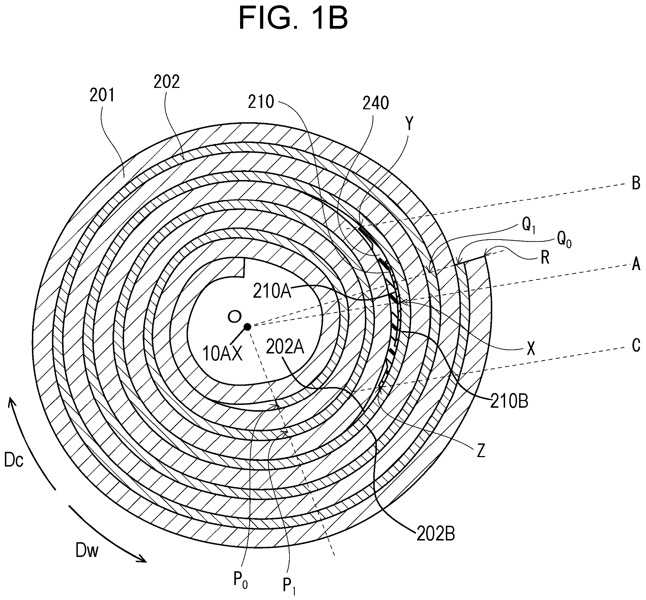

FIG. 1B is a schematic cross-sectional view of an example of electrode body 200 of lithium primary cell 10 according to the embodiment along line IB-IB shown in FIG. 1A. Electrode body 200 includes positive electrode 201, negative electrode 202, and separator 203 are wound spirally together such that positive electrode 201 and negative electrode 202 laminated on each other via separator 203 interposed between the electrodes. Outermost and innermost turns of electrode body 200 constitute positive electrode 201. In FIG. 1B, separator 203 is omitted from the figure for the sake of avoiding the complexity thereof, and only the winding of positive electrode 201 and negative electrode 202 is illustrated.

Lithium primary cell 10 according to the embodiment of the present disclosure includes electrode body 200, negative-electrode lead 210, and protective tapes 240 and 241. Electrode body 200 includes positive electrode 201, negative electrode 202, and separator 203 that are wound spirally together such that positive electrode 201 and negative electrode 202 are laminated on each other via separator 203 interposed between the electrodes. Negative-electrode lead 210 is attached on negative electrode 202 and covers a part of negative electrode 202 to be electrically connected to negative electrode 202. Protective tapes 240 and 241 cover respective parts of negative-electrode lead 210 and have larger widths than negative-electrode lead 210. The outermost turn of electrode body 200 constitutes positive electrode 201. Negative electrode 202 has a strip shape extending slenderly in winding direction Dw as a longitudinal direction. Negative-electrode lead 210 protrudes from negative electrode 202 in center-axis direction Da as a lateral direction perpendicular to the longitudinal direction.

Positive electrode 201 constituted by the outermost turn of electrode body 200 allows lithium primary cell 10 to have a larger amount of the positive-electrode active material, thereby facilitating the consumption of lithium at negative electrode 202. This increases the utilization rate of the negative electrode. In order to further increase the utilization rate of the negative electrode, both the outermost and innermost turns of electrode body 200 may constitute positive electrode 201.

Negative electrode 202 is wound more than two turns in electrode body 200. In this configuration, lithium primary cell 10 satisfies the following conditions (I) and (II).
(I) Negative-electrode lead 210 is disposed neither on the innermost turn of negative electrode 202 nor on the outermost turn of negative electrode 202.
(II) Straight lines A, B, and C are defined on a cross section of electrode body 200 perpendicular to center axis 10AX (center axis of winding). Straight line A passes through center axis 10AX and center X of protective tape 240. Straight line B is parallel with straight line A and passes through on end of protective tape 240. Straight line C B is parallel with straight line A and passes through another end of protective tape 240. An outer end of positive electrode 201 is located in a region of the cross section located between straight lines B and C. Protective tape 240 is located between the outer end of positive electrode 201 and center axis 10AX of electrode body 200.

Under the conditions (I) and (II), protective tape 240 is located between the innermost turn of negative electrode 202 and the outermost turn of negative electrode 202 and crosses the straight line passing through center axis 10AX of electrode body 200 and the outer end of positive electrode 201.

The outermost turn of electrode body 200 constituting positive electrode 201 allows the outer end (positive-electrode terminal end portion) on the winding-end side of positive electrode 201 to have a large pressure applied thereto. As discharge proceeds, positive electrode 201 in lithium primary cell 10 expands and contacts the inner surface of the cell can via separator 203 disposed between the positive electrode 201 and the inner surface of the cell can. Therefore, the pressures become highest at and around a straight line passing in a radial direction through the outer peripheral end of positive electrode 201 and the center of electrode body 200, hence decreasing a distance between the positive and negative electrodes. This configuration facilitates discharge reaction occurring in a portion of electrode body 200 along the straight line passing in the radial direction, and causes the lithium of negative electrode 202 tends to be consumed locally. As a result, the portion of electrode body 200 where lithium has been fully exhausted along the straight line in the radial direction described above separates and isolates regions where lithium remains from one another. The lithium in the isolated region is electrically disconnected from negative-electrode lead 210, thereby preventing the lithium from contributing to discharge.

In lithium primary cell 10 according to the embodiment, protective tape 240 is located to cross the straight line passing in the radial direction through the outer end of the positive electrode and the center of electrode body 200. Insulatative protective tape 240 covers at least a part of negative-electrode lead 210 in order to prevent short circuits between negative-electrode lead 210 and positive electrode 201. Protective tape 240 is also disposed to cover a part of negative electrode 202. Protective tape 240 permits electrolyte 204 to pass through less than separator 203 or, alternatively, may be impermissible for electrolyte 204 to pass through. Therefore, the region of negative electrode 202 covered with protective tape 240 allows the discharge reaction to proceed less than other regions of negative electrode 202.

As described above, the discharge reaction tends to proceed at and around straight line A extending in the radial direction that passes through the outer end of the positive electrode and center O of electrode body 200. However, protective tape 240 is located to cross the straight line A extending in the radial direction. The region covered with protective tape 240 where the discharge reaction hardly proceeds is interposed in the radial direction described above. The region covered with protective tape 240 prevents the proceeding of an excessive discharge reaction in the radial direction, allowing the discharge reaction to proceed uniformly over the entire of negative electrode 202. As a result, the utilization rate of negative electrode 202 is increased while reducing the formation of isolated regions (i.e., foil breakages) due to full exhaustion of lithium in the negative electrode 202.

The lithium of negative electrode 202 is consumed from the end likely having a pressure to be applied thereto toward the center. For this reason, negative-electrode lead 210 disposed near the center of negative electrode 202 resultantly reduces exhaustion of the lithium around negative-electrode lead 210.

The expression that negative electrode 202 is wound more than two turns means that the number of turns of wound negative electrode 202 of electrode body 200 exceeds two while the winding starts at the inner end of the innermost turn of negative electrode 202 on the winding-start side of negative electrode 202 and ends at the outer peripheral end on the winding-end side of negative electrode 202. However, no lithium may be disposed in regions at both ends in winding direction Dw of negative electrode 202 while having yet to be used and discharged, these regions without lithium are not included in the ends of negative electrode 202. That is, the inner end of negative electrode 202 on the winding-start side of negative electrode 202 means the position of the innermost turn on the exactly wind-starting side of negative electrode 202 in the region where lithium is disposed. Similarly, the outer end of negative electrode 202 on the winding-end side of negative electrode 202 means the position of the outermost turn on the exactly wind-ending side of negative electrode 202 in the region where lithium is disposed.

The innermost turn of an electrode is a range of one turn starting from a starting point, i.e., the inner end of the electrode on the winding-start side of the electrode. The outermost turn of an electrode is a range of one turn of the electrode starting from a starting point, i.e., the outer end of the electrode on the winding-end side of the electrode. Therefore, the expression that negative-electrode lead 210 is disposed not on the positions of the innermost and outermost turns of negative electrode 202 means that the center of negative-electrode lead 210 is located between the following positions: The position of a point that is wound by one turn starting from a start point, i.e. the inner end of negative electrode 202 on the winding-start side of negative electrode 202, and the position of another point that is wound, in direction Dc opposite to winding direction Dw, by one turn of negative electrode 202 starting from a start point, i.e. the outer end of negative electrode 202 on the winding-end side of negative electrode 202.

The number of times of winding an electrode (the number of turns of winding) is obtained by adding 1 (one) to the number of passing times that means the number of the electrode passes through an angular position of the starting point while the electrode is wound starting from the inner peripheral end on the winding-start side of the plate and ending at the outer peripheral end on the winding-end side. The angular position is where the inner peripheral end on the winding-start side of the electrode is in winding direction Dw with center axis 10AX as the winding center. For example, in FIG. 1B, the number of times of winding negative electrode 202 with center axis 10AX as the winding center is determined as follows. In the course of winding negative electrode 202 starting from the inner end of negative electrode 202 on the winding-start side of negative electrode 202 and ending at the outer end of negative electrode 202 on the winding-end side, negative electrode 202 passes through the angular position of the inner end of negative electrode 202 on the winding-start side of negative electrode 202 four times (four turns). Thus, the number of times of winding negative electrode 202 is determined to five turns.

As described above, the protective tapes are wider than negative-electrode lead 210. Here, the phrase "the protective tapes are wider than negative-electrode lead 210" means that the width of protective tape 240 in a cross section of electrode body 200 perpendicular to center axis 10AX is larger than the width of negative-electrode lead 210 in the cross section of electrode body 200 perpendicular to center axis 10AX. That is, the width of protective tape 240 in winding direction Dw is larger than the width of negative-electrode lead 210 in winding direction Dw. Typically, in the cross section, protective tape 240 is disposed to cover at least the entire one surface of negative-electrode lead 210. That is, in the cross section, protective tape 240 covers negative-electrode lead 210 and further areas beyond the ends of negative-electrode lead 210.

Condition (II) will be detailed below.

Straight line A is defined on a cross section perpendicular to center axis 10AX of winding of electrode body 200 (wound body). Straight line A passes through center O (center axis 10AX) of electrode body 200 and center X of protective tape 240. The position of the end of protective tape 240 on the winding-end side of the wound body in winding direction Dw is denoted by "Y". The position of the end of protective tape 240 on the winding-start side of the wound body in direction Dc opposite to winding direction Dw is denoted by "Z". Straight line B is defined to pass through position Y and be parallel with straight line A. Straight line C is defined to pass through position Z and be parallel with straight line A. Position R of the outer end of positive electrode 201 on the winding-end side of positive electrode 201 is within a region on the cross section between straight lines B and C. Protective tape 240 is located between the outer end of positive electrode 201 and center axis 10AX of electrode body 200 (see FIG. 1B). A positive-electrode active material layer may not be disposed at and around the outer end of positive electrode 201 on the winding-end side of positive electrode 201, an area in which the positive-electrode collector is exposed is disregarded as the positive electrode. However, the area of the exposed positive-electrode collector is not included in the end portion of positive electrode 201. The outer end of positive electrode 201 on the winding-end side of positive electrode 201 is the position of the end of the outermost turn on the exactly winding-end side of positive electrode 201, in the region where the positive-electrode active material layer is disposed. In the above description, the cross section of electrode body 200 perpendicular to center axis 10AX is a cross section of a portion electrode body 200 perpendicular to center axis 10AX of electrode body 200 including positive electrode 201, negative electrode 202, negative-electrode lead 210, and protective tape 240.

The condition of winding of negative electrode 202 of electrode body 200 may be analyzed after taking out electrode body 200 from cell 10. The condition of electrode body 200 is determined by obtaining a cross section of unused cell 10 on a plane perpendicular to center axis 10AX by X-ray Computed Tomography (CT), followed by image analyzing on the obtained cross section. In the case where electrode body 200 is disposed in a cylindrical cell can, the position of center axis 10AX of electrode body 200 may be set at a middle point between the following two positions, in a cross section of electrode body 200 parallel with the bottom of the cell can: Position R of the outer end of positive electrode 201 on the winding-end side of positive electrode 201 closest to the cell can, and the position on positive electrode 201 farthest from the position R (that is, the position is 0.5 turns away from the position R toward the winding-start side, i.e. along direction Dc opposite to winding direction Dw).

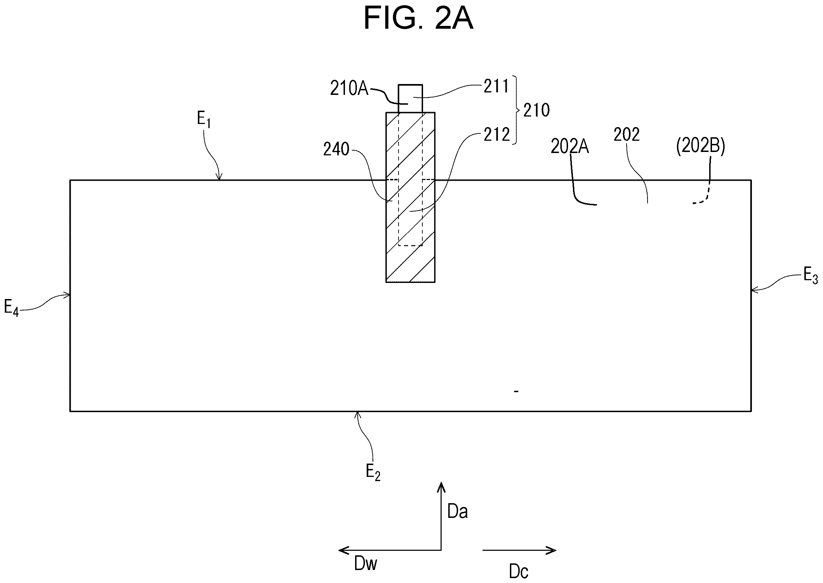

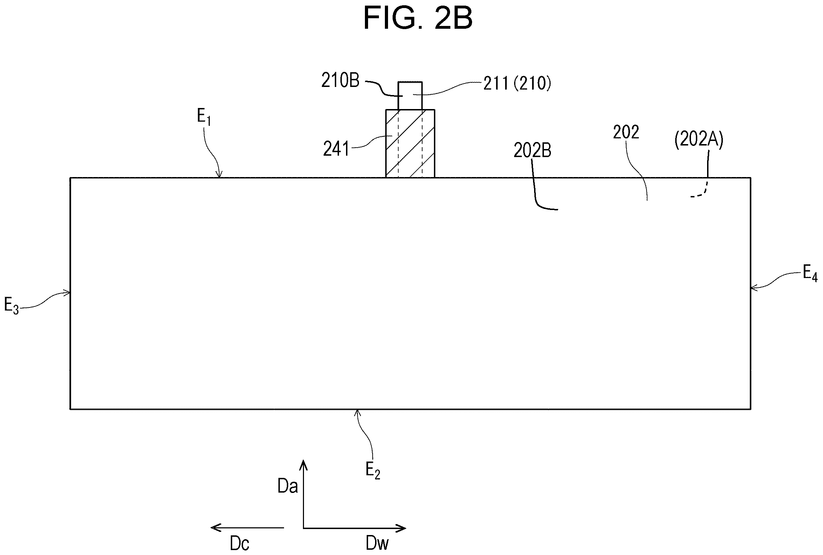

FIGS. 2A and 2B are schematic views of negative electrode 202 before being wound that is to be used in lithium primary cell 10 according to the embodiment. Negative-electrode lead 210 connected to inner circumferential surface 202A of negative electrode 202 has inner circumferential surface 210A and outer circumferential surface 210B. In lithium primary cell 10, protective tape 240 is disposed to cover a part of surface 210A of negative-electrode lead 210. Protective tape 240 is also connected to and covers a portion of inner circumferential surface 202A of negative electrode 202 around negative-electrode lead 210. Another protective tape 241 covers outer circumferential surface 210B of negative-electrode lead 210. However, protective tape 241 does not cover a portion of surface 202B of negative electrode 202 opposite to a portion of surface 202A negative electrode 202 on which negative-electrode lead 210 is attached. That is, protective tape 241 does not cover surface 202B of negative electrode 202 and exposes surface 202B. For example, negative-electrode lead 210 is disposed and attached on inner circumferential surface 202A (a principal surface facing the inner side of winding, i.e., facing center axis 10AX) of negative electrode 202. In this case, at least part of inner circumferential surface 202A where negative-electrode lead 210 is attached on inner circumferential surface 202Ais covered with protective tape 240. On the other hand, a portion of outer circumferential surface 202B of negative electrode 202 where negative-electrode lead 210 is not attached is not covered with protective tape 241. Thus, the lithium disposed at the area without being covered with protective tape 241 is usable for discharging, resultantly increasing the utilization rate of negative electrode 202.

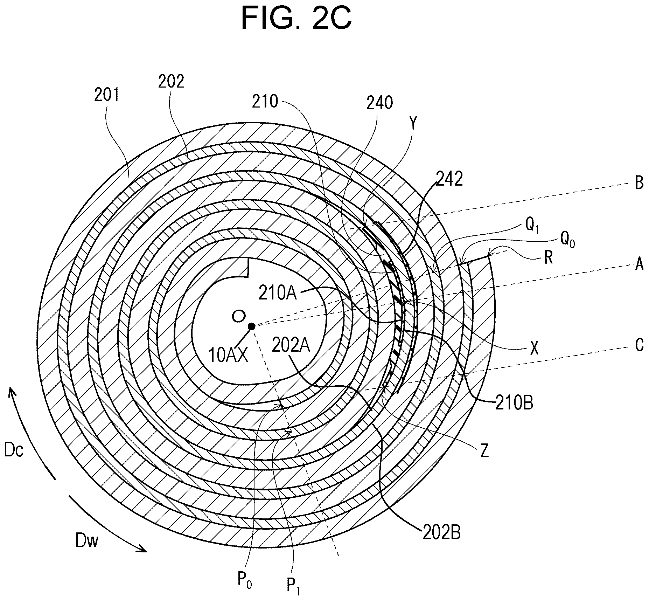

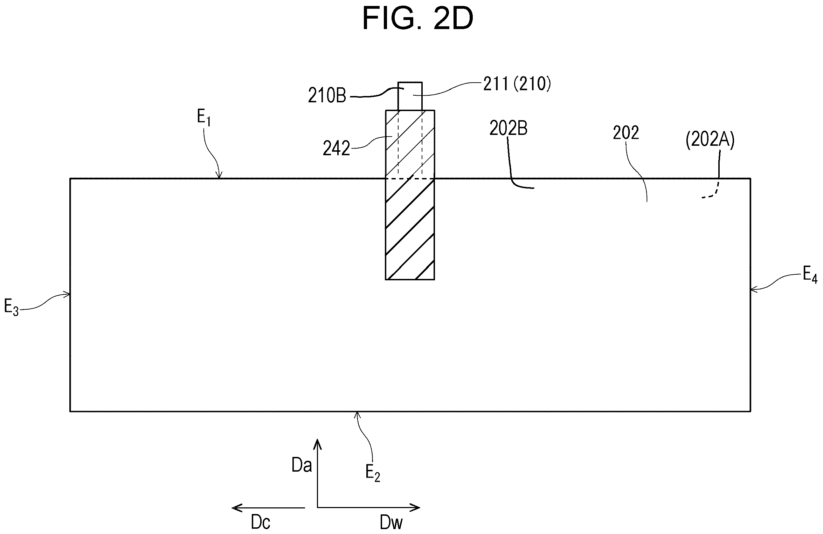

FIG. 2C is a schematic cross-sectional view of an example of another electrode body in a lithium primary cell according to the embodiment of the present disclosure. FIG. 2D is a schematic view of the negative electrode of the electrode body shown in FIG. 2C. In FIGS. 2C and 2D, the same portions as those in FIGS. 1B and 2B are denoted by the same numeral references. The electrode body shown in FIGS. 2C and 2D includes protective tape 242 instead of protective tape 241 of the electrode body shown in FIGS. 1B and 2B. Protective tape 242 covers surface 210B of first portion 211 of negative-electrode lead 210. Protective tape 242 extends onto surface 202B of negative electrode 202. This configuration increases the utilization rate of negative electrode 202.

Protective tapes 241 and 242 allows electrolyte 204 to pass through less than separator 203 or, alternatively, may be impermissible for electrolyte 204 to pass through. Protective tapes 241 and 242 may be made of either the same material as or different material from that of protective tape 240.

Lithium primary cell 10 may include a strip interposed between negative electrode 202 and separator 203 The strip covers a part of negative electrode 202. In a region of negative electrode 202 covered with the strip, the strip interposed between negative electrode 202 and positive electrode 201 causes the discharge reaction to hardly proceed, thereby facilitating the remaining of lithium there. This configuration forms a region where lithium remains and reduces the occurrence of isolation of lithium, and allows the lithium to remain usable for discharging, resultantly increasing the utilization rate of lithium.

In order to prevent short circuits between negative electrode 202 and the end of positive electrode 201 that tends to produce burrs when cutting a core material, i.e. the collector, lithium primary cell 10 commonly adopts the following configuration: Positive electrode 201 starts being wound ahead of negative electrode 202 such that positive electrode 201 locates also at a region extending beyond and inside the inner end of negative electrode 202 to be closer to center axis 10AX. In this case, in the surroundings of center axis 10AX on the winding-start side of electrode body 200, a portion of the innermost turn of positive electrode 201 does not face negative electrode 202. This configuration causes an excessive part of positive electrode 201 with respect to negative electrode 202. As a result, uneven discharge is likely to occur around the inner end of negative electrode 202 on the winding-start side of negative electrode 202, thereby causing a breakage of the negative-electrode foil in negative electrode 202, which tends to develop a region where lithium is isolated.

Therefore, in order to reduce the occurrence of isolation of lithium (foil breakage) around the inner end of negative electrode 202 on the winding-start side of negative electrode 202 and thereby to increase the utilization rate of the negative electrode, the strip is preferably disposed on the inner circumferential surface (a surface facing center axis 10AX of the wound body) in the first turn that includes the inner end of negative electrode 202 on the winding-start side of negative electrode 202.

The strip may be disposed on negative electrode 202 so as to extend slenderly parallel with winding direction Dw or, alternatively, may be disposed obliquely (or while being bent) with respect to winding direction Dw. However, the strip may be disposed obliquely with respect to winding direction Dw in order to make uniform a bulge in the outer diameter of electrode body 200 due to the strip and to reduce uneven discharge due to variations, in center-axis direction Da of electrode body 200, of the pressures applied to negative electrode 202. The strip may on extend negative electrode 202 from one end of negative electrode 202 in center-axis direction Da of electrode body 200 toward the other end of negative electrode 202.

The strip may include insulative material or conductive material. The strip made of conductive material functions as a collector, and reliably ensure the electrical connection between the lithium in negative electrode 202 and negative-electrode lead 210 even in the terminal stage of discharge, thereby further reducing the decrease in the discharge capacity. In the case that the strip is made of conductive material, the conductive material is preferably a stable material that involves no electrochemical reaction at the potential of negative electrode 202. In this regard, the conductive material may preferably be substantially free of lithium. The conductive material may contain, for example, copper.

A designed energy density of lithium primary cell 10 is 850 Wh/L or more. The designed energy density may increase by increasing the amount of the positive-electrode active material contained in cell 10. However, the actual energy density is hardly increased unless the amount of lithium that contributes to discharge inside negative electrode 202 is increased commensurately with the increase in the amount of the positive-electrode active material. In order to provide lithium primary cell 10 with a high capacity, in addition to increasing the designed energy density, it is important to raise the utilization rate of negative electrode 202 to e.g., 85% or more, and to increase the amount of lithium that contributes to discharge inside negative electrode 202. The designed energy density of 850 Wh/L or more, adopting the configuration of electrode body 200 and negative-electrode lead 210 according to the present disclosure, provides a remarkable effect on reduction in the occurrence of foil breakages of negative electrode 202 in the terminal stage of discharge, thereby effectively increasing the negative-electrode utilization rate.

Lithium primary cell 10 according to the embodiment of the present disclosure may have a negative-electrode utilization rate of 85% or more, 90% or more, or 94% or more.

The designed energy density is defined by the following formulas based on the positive-electrode theoretical capacity that is calculated from the amount of the positive-electrode active material. A rated voltage of the cell is, e.g., 3 V. (designed energy density) = (positive-electrode theoretical capacity) × (rated voltage)/(volume of cell 10) (volume of cell 10) = π × [(outer diameter d10 of cell can 100)/2]2 × (maximum height h10 of cell 10 with respect to bottom 100B of cell can 100)

The positive-electrode theoretical capacity is expressed by the following formula when the positive-electrode active material is electrolytic manganese dioxide (MnO₂). (positive-electrode theoretical capacity) = (mass [mg] of MnO2 in positive- electrode material mixture) × (theoretical capacity per 1 mg of MnO2 [= 0.308 mAh/mg]) × (positive-electrode utilization rate [= 0.9])

The negative-electrode utilization rate (%) is determined as follows: The discharge capacity C is determined of lithium primary cell 10 after manufacturing when discharged under the following discharge conditions. The amount of lithium is determined in the negative electrode having been taken out from lithium primary cell 10 after manufacturing. The thus-determined amount of lithium is used to calculate negative-electrode theoretical capacity N. Then the negative-electrode utilization rate (%) is determined by (C/N) × 100.

### Condition of Discharge

Cell 10 is pre-discharged at a current of 2 A for 162 seconds at room temperature (25°C). Then, cell 10 is connected to a resistor with a constant resistance of 1 kΩ and discharged until cell have a voltage of 2.0 V.

The discharge capacity (90 mAh) at the pre-discharge is added to the discharge capacity at the 1-kΩ constant-resistance discharge described above to determine discharge capacity C. Negative-electrode theoretical capacity N is determined by multiplying the amount of lithium (mg) in the negative electrode by the theoretical capacity per 1 mg of lithium (= 3.86 mAh/mg).

Negative-electrode lead 210 covers a part of negative electrode 202 and is electrically connected to negative electrode 202 (see FIGS. 2A and 2B). FIG. 1B shows the positional relation between the location at which negative-electrode lead 210 is attached in electrode body 200 and the portion of the outermost turn of positive electrode 201.

Negative electrode 202 is wound more than two turns. Negative-electrode lead 210 is disposed neither on the innermost turn of the negative electrode 202 nor on the outermost turn of the negative electrode 202. That is, center X of protective tape 240 is located between position P₁ and position Q₁, where position P₁ is the point that is wound by one turn starting from end portion P0, i.e. the inner peripheral end in direction Dc on the winding-start side of negative electrode 202, and position Q₁ is the point that is wound, in direction Dc opposite to winding direction Dw, by one turn starting from end portion Q0, i.e. the outer peripheral end on the winding-end side of negative electrode 202. This means that, negative electrode 202 is present both sides: on outer and inner turn sides of position X with respect to the position of center X of protective tape 240.

As shown in FIG. 1B, straight line A is defined as a straight line that passes center O (center axis 10AX) of electrode body 200 and center X of protective tape 240 when viewed in center-axis direction Da of the winding. The position of the outer end of positive electrode 201 on the winding-end side of positive electrode 201 is denoted by position R of the outer end of the positive electrode. Position R of the outer end of the positive electrode is the position of the outer end of positive electrode 201 on the exactly winding-end position side of positive electrode 201 where the positive-electrode active material layer is disposed.

The position of the end of protective tape 240 in winding direction Dw covering negative-electrode lead 210 is denoted by "Y". The position of the end of protective tape 240 in the direction opposite to winding direction Dw covering negative-electrode lead 210 is denoted by "Z". Straight line B is defined as a straight line that passes through position Y and is parallel with straight line A. Straight line C is defined as a straight line that passes through position Z and is parallel with straight line A.

Position R of the terminal end of the positive electrode is located either on or near straight line A. This configuration prevents the proceeding of an excessive discharge reaction in the radial direction due to the terminal end of the positive electrode and allows the discharge reaction to proceed uniformly over the entire of negative electrode 202. As a result, the occurrence of foil breakages is reduced, thereby increasing the utilization rate of negative electrode 202. Position R of the terminal end of the positive electrode is not necessarily located on straight line A. Position R of the terminal end of positive electrode may be located near straight line A within a region between straight line B and straight line C.

As shown in FIGS. 2A and 2B, negative-electrode lead 210 and protective tape 240 are disposed on negative electrode 202. Negative-electrode lead 210 covers a part of negative electrode 202 and is electrically connected to negative electrode 202. FIG. 2A illustrates an arrangement of negative-electrode lead 210 and protective tape 240 on negative electrode 202 when viewed from a principal surface (inner circumferential surface 202A) side that faces inward when negative electrode 202 is wound to constitute electrode body 200. FIG. 2B illustrates an arrangement of negative-electrode lead 210 and protective tape 241 on negative electrode 202 when viewed from another principal surface (outer circumferential surface) side that faces outward when negative electrode 202 is wound to constitute electrode body 200.

Negative electrode 202 has a rectangular strip shape extending slenderly in winding direction Dw as a longitudinal direction, and has ends (first end E₁ to fourth end E₄) constituting four sides. Winding direction Dw is defined as a direction directed from third end E₃, i.e., the inner end on the winding-start side, toward fourth end E₄, i.e., the outer end on the winding-end side. Center-axis direction Da is defined as a direction directed from second end E₂ toward first end E₁, and directed from the bottom of cell can 100 toward sealing plate 300 shown in FIG. 1A. Negative-electrode lead 210 is disposed at a position (for example, a position near the center) that is located at neither the innermost nor outermost turn while negative electrode 202 is wound in winding direction Dw. Negative-electrode lead 210 has first portion 211 protruding from first end E₁ of negative electrode 202 and second portion 212 protruding in a direction opposite to the direction in which first portion 211 protrudes. Second portion 212 covers negative electrode 202.

Second portion 212 of negative-electrode lead 210 is covered with protective tape 240 for preventing short-circuit. As a margin for attaching protective tape 240 to negative-electrode lead 210, a part of negative electrode 202 adjacent to second portion 212 is also covered with protective tape 240. The width of the margin is, for example, 5 mm or less, more preferably 3 mm or less, on the side (second end side) opposite to the protruding direction of the first portion of negative-electrode lead 210.

As shown in FIG. 2A, on the inner circumferential surface of negative electrode 202, protective tape 240 covers both second portion 212 and the partial region of negative electrode 202 adjacent to second portion 212. On the other hand, as shown in FIG. 2B, on the outer circumferential surface side of negative electrode 202, protective tape 241 covers only first portion 211 of negative-electrode lead 210, and does not cover negative electrode 202. This configuration prevents the protective tape from blocking the discharge reaction in the outer circumferential surface negative electrode 202, resultantly increasing the utilization rate of negative electrode 202.

However, as shown in FIGS. 2C and 2D, protective tape 242 may also cover an area of the outer circumferential surface of negative electrode 202 opposite to the portion of negative electrode 202 having second portion 212 attached thereon. This area corresponds to the portion where second portion 212 is attached. On the outer circumferential surface of negative electrode 202, protective tape 242 may be disposed as in the same layout shown in FIG. 2A.

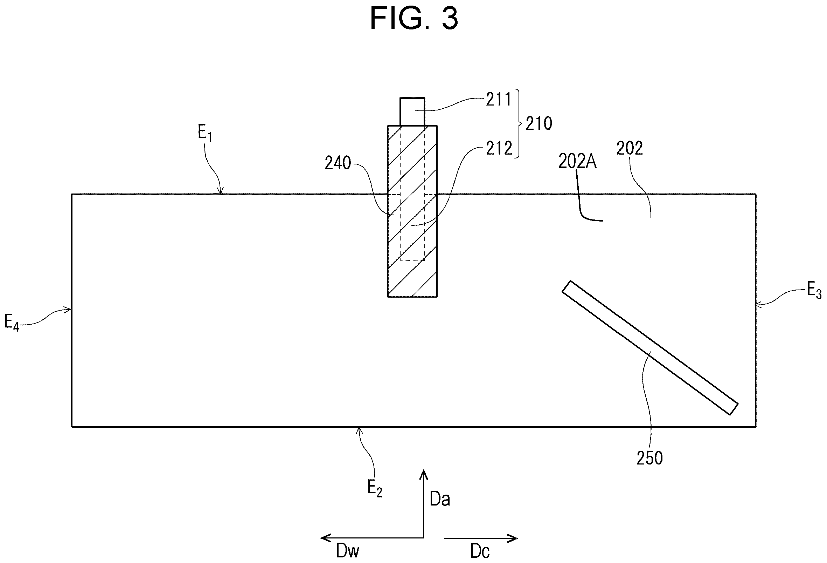

FIG. 3 is a schematic view of another example of negative electrode 202 before being wound to be used in lithium primary cell 10 according to the embodiment. This figure shows an arrangement of negative-electrode lead 210 and protective tape 240 on negative electrode 202 when viewed from the principal surface (inner circumferential surface) side that faces inward when negative electrode 202 is wound to constitute electrode body 200. In the example in FIG. 3, strip 250 is disposed at the position on the innermost turn of the inner circumferential surface of negative electrode 202 from which the winding is started.

Strip 250 extends on the inner circumferential surface of negative electrode 202 in a direction oblique with respect to winding direction Dw such that strip 250 crosses between first end E₁ from which first portion 211 of negative-electrode lead 210 protrudes in center-axis direction Da and second end E₂ opposite to first end E₁. In the example shown in FIG. 3, strip 250 obliquely extends to approach first end E₁ as approaching negative-electrode lead 210 and fourth end E₄, i.e., the outer end on the winding-end side, starting from near both second end E₂ and third end E₃, i.e., the inner end on the winding-start side.

Strip 250 on the inner circumferential surface of negative electrode 202 preferably extends in a direction from the third end E₃ toward both negative-electrode lead 210 and fourth end E₄ in at least a region of negative electrode 202that corresponds to the innermost turn in the first turn on the winding-start side. This configuration reduces the occurrence of isolation of lithium (foil breakage) around the inner end of negative electrode 202 on the winding-start side of negative electrode 202 where uneven discharge particularly tends to occur, resultantly increasing the negative-electrode utilization rate.

Moreover, strip 250 extending obliquely reduces variations in the outer diameter (i.e., bulge) of electrode body 200 in center-axis direction Da when winding negative electrode 202 together with positive electrode 201 and separator 203 to constitute electrode body 200, resultantly applying a pressure uniformly to negative electrode 202. This configuration reduces uneven discharge due to variations in the pressure applied to negative electrode 202 in center-axis direction Da of electrode body 200, which in turn reduces the occurrence of isolation of lithium (foil breakage), resultantly increasing the negative-electrode utilization rate.

Strip 250 is not limited to the example shown in FIG. 3 and, for example, may obliquely extend to approach second end E₂ as approaching both negative-electrode lead 210 and fourth end E₄ starting from near both first end E₁ and third end E₃, i.e., the inner end on the winding-start side. Further, strip 250 may extend in winding direction Dw. However, as shown in FIG. 3, in the case where the strip obliquely extends to approach first end E₁ as approaching both negative-electrode lead 210 and fourth end E₄, the strip becomes close to the protective tape. In the vicinity of both the strip and the protective tape, the discharge reaction hardly proceeds, and allows lithium to readily remain there. This configuration allows the remaining lithium to be usable for discharge in the terminal stage of discharge, resultantly increasing the utilization rate of negative electrode 202.

The strip is preferably disposed on the principal surface (inner circumferential surface) out of two principal surfaces of negative electrode 202 which is closer to the inner turn when negative electrode 202 is wound to constitute electrode body 200. Electrode body 200 expands as the discharge proceeds, and applies a pressure to negative electrode 202 due to the expansion. In the case that the strip is disposed on the surface (outer circumferential surface) closer to the outer turn, the portion of negative electrode 202 covered with the strip is prevented from radially moving by the strip, resultantly causing the portion to hardly follow the expansion of electrode body 200 and increases the pressures. This facilitates the proceed of the discharge reaction at and around the strip, accordingly facilitating the occurrence of uneven discharge and the occurrence of uneven consumption of lithium. In contrast, in the case that the strip is disposed on the surface closer to the inner turn, the portion of negative electrode 202 covered with the strip moves according to the expansion of electrode body 200 without being hindered by the strip. As a result, the pressure rise due to the strip is reduced, and reduces the tendency for the discharge reaction to readily proceed at and around the strip. This configuration allows the strip to sufficiently exhibit the effect of ensuring the electrical connection to negative-electrode lead 210 in the terminal stage of discharge.

### Negative Electrode

Negative electrode 202 contains metal lithium or lithium alloy. The lithium alloy contains metal elements other than lithium. Examples of other metal elements include Al, Mg, Sn, Ni, Pb, In, Na, Ca, K, Fe, and Si. The lithium alloy may be lithium alloy containing one of these other metal elements or, alternatively, lithium alloy containing two or more metal elements. The lithium alloy may be, e.g., Li-Al, Li-Sn, Li-NiSi, or Li-Pb. These metal lithium and lithium alloys can be contained as they are as a negative-electrode plate in a state of being formed in sheet. Among lithium alloys, a Li-Al alloy is preferably contained. The content of metal elements other than lithium contained in the lithium alloy may preferably range from 0.05% by mass to 15% by mass in view of securing the discharge capacity and stabilizing the internal resistance. The metal lithium or lithium alloy has any shape and thickness in accordance with, e.g., the shape, dimensions, and standard performance of lithium primary cell 10.

### Strip

The strip includes a substrate layer. The substrate layer contains insulating material or conductive material.

The insulating material of the substrate layer may be resin material. Examples of the resin material include polyimide, polyphenylene sulfide, polyethersulfone, polyolefin, such as polyethylene and polypropylene, and polyethylene terephthalate. Preferred among them is a polyolefin, and more preferred is polypropylene. The insulating material may be prepared by solidifying insulating paint stable against electrolytes, that is, no change is caused physically and chemically by electrolytes.

The conductive material of the substrate layer may be metal material. This material provides the strip with electrical conductivity, and allows the strip to function as a collector, as an alternative to negative electrode 202, even in the terminal stage of discharge in which lithium becomes exhausted. Examples of the metal material are not particularly limited, and include a metal foil, such as a copper foil. The conductive material may be prepared by solidifying conductive paint stable against electrolytes.

The strip may further include an adhesive layer with adhesivity in addition to the substrate layer. The strip may be a long tape, for example, including the adhesive layer disposed on the substrate layer.

The adhesive layer contains, for example, at least one component selected from the group consisting of rubber component, silicone component, and acrylic resin component. Specifically, the rubber component may be, e.g., synthetic rubber and natural rubber. Examples of the synthetic rubber include butyl rubber, butadiene rubber, styrene-butadiene rubber, isoprene rubber, neoprene, polyisobutylene, acrylonitrile-butadiene rubber, styrene-isoprene block copolymer, styrene-butadiene block copolymer, and styrene-ethylene-butadiene block copolymer. Examples of the silicone component include organic compound having polysiloxane structure, and silicone-containing polymer. The silicone-containing polymer is exemplified by a peroxide curing type silicone, and an addition reaction type silicone. The acrylic resin component may be polymer having acrylic monomer, such as acrylic acid, methacrylic acid, acrylic acid ester, and methacrylic acid ester, which may be in the form of homopolymer or copolymer of acrylic monomers, such as acrylic acid, methacrylic acid, methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethyl hexyl acrylate, and 2-ethylhexyl methacrylate. The adhesive layer may further contain crosslinking agent, plasticizer, and/or tackifier.

The strip has width W of 0.5 mm or more, but width W may preferably be 1 mm or more, and more preferably 1.5 mm or more in view of appropriately reducing the consumption-by-discharge of lithium covered with the strip and thereby ensuring the electrical connection between the lithium and negative-electrode lead 210. Moreover, width W of the strip is 5 mm or less, may be preferably 3 mm or less, and more preferably 2.5 mm or less in view of sufficiently reducing the decrease in discharge capacity (output capacity) of cell 10.

### Positive Electrode

The positive-electrode active material contains at least one selected from the group consisting of manganese oxide and graphite fluoride. As the positive-electrode active material, manganese dioxide may be used singly or in combination with, e.g., manganese oxide or graphite fluoride by mixing. A cell containing manganese dioxide develops a relatively high voltage and features excellent pulse-discharge characteristics. As the manganese dioxide, an electrolytic manganese dioxide processed by, e.g., a neutralization treatment with ammonia, sodium hydroxide or lithium hydroxide is preferably used. Further, calcined electrolytic manganese dioxide, which is further processed by calcination, is preferably used. Specifically, the electrolytic manganese dioxide is preferably calcined at a temperature ranging from 300°C to 450°C in air or oxygen for about 6 to 12 hours. The oxidation number of manganese contained in the manganese dioxide is typically tetravalent but is not limited to this and may be smaller than it. Examples of usable manganese oxide include MnO, Mn₃O₄, Mn₂O₃, and MnO₂. Manganese dioxide is commonly used as a primary component. The manganese dioxide may be in a mixed crystalline state including multiple crystalline states. In addition, in the case that non-calcined electrolytic manganese dioxide is used, manganese dioxide having a decreased specific surface area is preferably used which is prepared to have a large degree of its crystallinity by adjusting conditions of the electrolytic synthesis of the manganese dioxide. Further, a small amount of chemical manganese dioxide may be added.

The positive electrode 201 includes a positive-electrode material mixture layer and positive-electrode collector to which the positive-electrode material mixture layer adheres. The positive-electrode material mixture layer contains positive-electrode active material. The positive-electrode material mixture layer is disposed on one or both surfaces of the sheet-shaped positive-electrode collector (e.g., a stainless-steel expanded metal, net, or punched metal) so as to bury the positive-electrode collector therein. The positive-electrode collector may be made of, e.g., stainless steel, aluminum, or titanium. The positive-electrode material mixture layer may contain resin material, such as fluorocarbon resin, as binder, in addition to the positive-electrode active material. The positive-electrode material mixture layer may contain conductive material, such as carbon material, as electrically conductive agent.

The binder may employ, e.g., fluorocarbon resin, rubber particles, or acrylic resin. Examples of the fluorocarbon resin include polytetrafluoroethylene, tetrafluoroethylene-hexafluoropropylene copolymer, and polyvinylidene fluoride. Examples of the rubber particles include styrene-butadiene rubber (SBR) and modified acrylonitrile rubber. Examples of the acrylic resin include ethylene-acrylic acid copolymer. The amount of the binder contained in the positive-electrode material mixture preferably ranges from 1% by mass to 10% by mass, more preferably from 2% by mass to 8% by mass, and still more preferably from 3% by mass to 7% by mass. These binders may be used singly or in combination of two or more kinds.

The electrically conductive agent may employ, for example, natural graphite, artificial graphite, carbon black, or carbon fibers. Examples of the carbon black include acetylene black, Ketjen black, channel black, furnace black, lamp black, and thermal black. These materials may be used singly or in combination of two or more kinds. The amount of the electrically conductive agent contained in the positive-electrode material mixture ranges, for example, from 1 (one) part by mass to 30 parts by mass with respect to 100 parts by mass of the positive-electrode active material.

Positive electrode 201 is produced, e.g., as follows.

First, a positive-electrode material mixture is prepared by mixing the manganese dioxide, the electrically conductive agent, and the binder. The mixing method of the manganese dioxide, electrically conductive agent, and binder is not particularly limited. For example, the manganese dioxide, electrically conductive agent, and binder is mixed in a dry or wet process to prepare a material mixture. The prepared mixture is put in a stainless-steel expanded metal to be a collector, and then, pressed with rollers and then, cut to have a predetermined size, resultantly providing positive electrode 201.

### Separator

Separator 203 may preferably employ a porous sheet for facilitating electrolyte 204 to pass through. The porous sheet is made of insulating material having resistance to internal environment of lithium primary cell 10. Specifically, examples of the porous sheet include a synthetic-resin nonwoven fabric and a synthetic-resin microporous film. Examples of a synthetic resin usable for the nonwoven fabric include polypropylene, polyphenylene sulfide, and polybutylene terephthalate. Among them, polyphenylene sulfide and polybutylene terephthalate are excellent in high-temperature resistance, solvent resistance, and liquid-retaining properties. Examples of the synthetic resin usable for the microporous film include polyolefin resin, such as polyethylene, polypropylene, and ethylene-propylene copolymer. The microporous film may contain inorganic particles as necessary. Separator 203 preferably has a thickness of 5 µm or more and 100 µm or less, for example.

### Non-Aqueous Electrolyte

Non-aqueous electrolyte 204 employs solution of lithium salt, as solute, in a non-aqueous solvent. If necessary, the solution may contain an additive. The non-aqueous solvent may employ organic solvent commonly usable for non-aqueous electrolyte 204 of lithium primary cells. For example, herein usable are, e.g., dimethyl ether, γ-butyrolactone, propylene carbonate, ethylene carbonate, and 1,2-dimethoxyethane. These materials may be used singly or in combination of two or more kinds. In view of enhancing the discharge characteristics of the lithium primary cell, the non-aqueous solvent preferably contains both cyclic carbonic acid ester having a high boiling point, and chain ether having a low viscosity even at low temperatures. The cyclic carbonic acid ester preferably contains at least one selected from the group consisting of propylene carbonate (PC) and ethylene carbonate (EC), and particularly preferably contains PC. The chain ether preferably has a viscosity of 1 mPa·s or less at 25°C, and preferably contains dimethoxyethane (DME). The viscosity of the non-aqueous solvent may be determined at a temperature of 25°C and a shear rate of 10000 (1/s) using a small sample viscometer m-VROC manufactured by RheoSense, Inc.

The solute may include lithium salt, such as LiCF₃SO₃, LiClO₄, LiBF₄, LiPF₆, LiRaSO₃ where Ra is a fluorinated alkyl group having one to four carbon atoms, LiFSO₃, LiN(SO₂Rb)(SO₂Rc) where each of Rb and Rc is independently a fluorinated alkyl group having one to four carbon atoms, LiN(FSO₂)₂, and LiPO2F₂. These materials may be used singly or in combination of two or more kinds. The total concentration of the lithium salt contained in non-aqueous electrolyte 204 ranges preferably from 0.2 mol/L to 2.0 mol/L, may range from 0.3 mol/L to 1.5 mol/L, and may range from 0.4 mol/L to 1.2 mol/L.

The non-aqueous electrolyte 204 may further contain additive other than the materials mentioned above. The additive includes, e.g., propane sultone or vinylene carbonate. Part of the hydrogen groups in the additive may be substituted with hydroxyl group, halogen group, and/or alkyl group. The additive may be used singly or in combination of two or more kinds. The total concentration of the additive contained in non-aqueous electrolyte 204 ranges preferably form 0.003 mol/L to 5 mol/L, and more preferably from 0.003 mol/L to 3 mol/L.

The present disclosure will be specifically described below with reference to Examples and Comparative Examples; however, the present invention is not limited to the following Examples.

Example 1

### (1) Production of Positive Electrode

A positive-electrode material mixture was prepared by mixing 92 parts by mass of electrolytic manganese dioxide serving as the positive-electrode active material, 3 parts by mass of Ketjen black serving as the electrically conductive agent, and 5 parts by mass of polytetrafluoroethylene serving as the binder.

Next, a positive-electrode collector was prepared by forming an expanded metal made of a 0.1-mm thick ferritic stainless steel (SUS 444). Then, two pairs of rolls were used, with each pair consisting of two rolls. The positive-electrode material mixture was passed between the paired rolls, thereby obtaining sheets of the positive-electrode material mixture. The resulting two sheets of the positive-electrode material mixture were pressed from both sides via the expanded metal placed between the sheets, and then, is dried to obtain a positive electrode precursor. After that, using another pair of rolls, the positive electrode precursor was subjected to rolling until the thickness was reduced to 0.63 mm, and then, is cut to have predetermined dimensions (width: 42 mm, length: 185 mm), thereby providing a positive electrode plate. The positive-electrode material mixture was removed from a part of the positive electrode plate such that the positive-electrode collector was exposed from the part of the positive electrode plate. A positive-electrode lead was welded to the exposed part of the positive-electrode collector. A lead-protecting tape was attached on the upper portion of the positive-electrode lead for short-circuit prevention.

### (2) Production of Negative Electrode

A cut 0.3-mm thick metal-lithium plate with predetermined dimensions (width: 41 mm, length: 153 mm) was used as a negative-electrode plate. The weight of the negative-electrode plate was measured for determining its negative-electrode utilization rate. Negative-electrode lead 210 made of nickel was connected to the negative-electrode plate. Protective tapes 240 and 242 were attached for short-circuit prevention so as to cover the following surfaces of negative-electrode lead 210: the surface of a protruding-portion (first portion) from the negative-electrode and the surface of a connecting-portion (second portion) to the negative-electrode. Protective tapes 240 and 242 had margins for their attaching to and covering part of negative electrode 202 beyond and outside the second portion. Negative electrode 202 was thus produced in which protective tapes 240 and 242 were disposed on both surfaces of negative electrode 202, as shown in FIG. 2A.

### (3) Preparation of Electrolyte

Electrolyte 204 was prepared by dissolving lithium trifluoromethanesulfonate (LiCF₃SO₃), lithium salt, at a concentration of 0.5 mol/L in a mixed non-aqueous solvent of propylene carbonate (PC), ethylene carbonate (EC), and 1,2-dimethoxyethane (DME), in proportions by volume of 2:1:2.

### (4) Production of Electrode Body

The positive-electrode material mixture was removed from a part of positive electrode 201, thereby exposing the positive-electrode collector from the part of positive electrode 201. A stainless-steel positive-electrode tab lead was welded to the exposed part of the collector. Positive electrode 201 and negative electrode 202 were spirally wound with 25-µm thick separator 203 interposed between them, thereby forming electrode body 200 with a columnar shape (diameter: 16 mm, internal diameter: 4 mm). Separator 203 was made of a polyethylene microporous film. In electrode body 200, negative electrode 202 was wound five turns, and negative-electrode lead 210 was disposed at a position in the third turn from the inner peripheral end on the winding-start side. Moreover, electrode body 200 was formed to satisfy the above-described condition (II).

### (5) Assembling of Cylindrical Cell

The resulting electrode body 200 was inserted into a cylindrical cell can with a bottom while a lower insulating plate with a ring shape was disposed at a the bottom of the cell can. An upper insulating plate was disposed on electrode body 200. After that, negative-electrode lead 210 connected to negative electrode 202 was connected to the inner surface of the sealing plate, and the positive-electrode lead connected to the positive-electrode collector of positive electrode 201 was connected to an inner bottom surface of the cell can.

Next, non-aqueous electrolyte 204 was put into the cell can. After that, the sealing plate was inserted into near the opening of the cell can, and then, the peripheral edge of the sealing plate is welded by laser to the opening edge of the cell can, resultantly completing a cylindrical lithium primary cell having a diameter of 17.4 mm and a height of 50.5 mm. This cell has a theoretical capacity determined by positive electrode 201, and the designed energy density is 902 Wh/L that is determined by calculation based on the positive-electrode theoretical capacity calculated from the amount of manganese dioxide contained as the positive-electrode active material.

Five sealed cylindrical lithium primary cells A1 having the structure shown in FIG. 1A were thus produced.

### Evaluation

The thus-produced cells were pre-discharged by about 90 mAh at a constant current of 2A for 162 seconds at a temperature of 25°C. After that, the cells were discharged through a constant resistance (1 kΩ), thereby measuring the discharge capacity until the voltage decreases to 2.0 V. The sum of the capacity during the pre-discharging and the capacity discharged until the voltage decreased to 2.0 V. A ratio of the sum to the discharge capacity that was a theoretical capacity determined based on the amount of the negative-electrode active material contained in negative electrode 202 was determined. Then, an average of the determined five ratios for the five cells was calculated and used as the negative-electrode utilization rate.

### Example 2

Cylindrical lithium primary cells A2 having a designed energy density of 850 Wh/L were produced in the same way as in Example 1 except that the amount of manganese dioxide, i.e., the positive-electrode active material, was changed from that of Example 1. Five cylindrical lithium primary cells A2 were produced and evaluated in their negative-electrode utilization rate in the same way.

### Example 3

The position of negative-electrode lead 210 connected to the negative electrode was changed from that of Example 1. That is, in electrode body 200, negative-electrode lead 210 was disposed on a position in the second turn from the innermost turn on the winding-start side. However, electrode body 200 was formed to satisfy the above-described condition (II) as Example 1.

Five cylindrical lithium primary cells A3 were produced in the same way as in Example 1 except for the above, and were evaluated for their negative-electrode utilization rate in the same way.

### Example 4

The number of turns of winding the negative electrode in producing electrode body 200 was changed from 5 turns in Example 1 to 3 turns. Accordingly, the thicknesses and lengths of the positive and negative electrodes were changed such that the amounts of the positive- electrode active material and the negative-electrode active material contained therein became the same as those in Example 1. Positive electrode 201 had a thickness of 0.95 mm and a length of 122 mm. The negative electrode had a thickness of 0.46 mm and a length of 100 mm. Negative-electrode lead 210 was disposed at a position in the second turn from the inner peripheral end on the winding-start side, and electrode body 200 was formed to satisfy the condition (II).

Five cylindrical lithium primary cells A4 were produced in the same way as in Example 1 except for the above, and were evaluated for their negative-electrode utilization rate in the same way.

### Example 5

The number of turns of winding the negative electrode in producing electrode body 200 was changed from 5 turns in Example 1 to 6 turns. Accordingly, the thicknesses and lengths of the positive and negative electrodes were changed such that the amounts of the positive-electrode active material and the negative-electrode active material contained charged therein became the same as those in Example 1. Positive electrode 201 had a thickness of 0.54 mm and a length of 214 mm. The negative electrode had a thickness of 0.25 mm and a length of 183 mm. Negative-electrode lead 210 was disposed at a position in the fourth turn from the inner peripheral end on the winding-start side, and electrode body 200 was formed to satisfy the condition (II).

Five cylindrical lithium primary cells A5 were produced in the same way as in Example 1 except for the above, and were evaluated for their negative-electrode utilization rate in the same way.

### Example 6

The number of turns of winding the negative electrode in producing electrode body 200 was changed from 5 turns in Example 1 to 6 turns. Accordingly, the thicknesses and lengths of the positive and negative electrodes were changed such that the amounts of the positive-electrode active material and the negative-electrode active material contained therein became the same as those in Example 1. Positive electrode 201 had a thickness of 0.54 mm and a length of 214 mm. The negative electrode had a thickness of 0.25 mm and a length of 183 mm. Negative-electrode lead 210 was disposed at a position in the second turn from the inner peripheral end on the winding-start side, and electrode body 200 was formed to satisfy the condition (II).

Five cylindrical lithium primary cells A6 were produced in the same way as in Example 1 except for the above, and were evaluated for their negative-electrode utilization rate in the same way.

### Example 7

When producing the negative electrode, a tape with a width of 2 mm was attached, as a strip, on a region of the inner circumferential surface of the negative electrode at the innermost turn in the first turn on the winding-start side of the negative electrode. The tape contained resin base material made of polypropylene, and an adhesive layer contained rubber as a main component. The tape was obliquely disposed so as to approach first end E₁ from second end E₂ opposite to first end E₁ from which the electrode lead protruded, as approaching both negative-electrode lead 210 and fourth end E₄, starting from near third end E₃, i.e., the inner peripheral end on the winding-start side. This configuration provided the resulting negative electrode as follows: The protective tape and the strip were disposed on the inner circumferential surface of the negative electrode on the inner side of winding as shown in FIG. 3. The protective tape was disposed on the outer circumferential surface of the negative electrode on the outer side of winding of the negative electrode in the same way as in Example 1.

Using the thus-obtained negative electrodes, five cylindrical lithium primary cells A7 were produced in the same way as in Example 1 except for the above, and were evaluated for their negative-electrode utilization rate in the same way.

### Example 8

In producing the negative electrode, the region to which the protective tape was attached was changed such that protective tape 241 on the outer circumferential surface of the negative electrode covered only the portion (first portion) of negative-electrode lead 210 protruding from the negative electrode, and did not cover the portion (second portion) of negative-electrode lead 210 connected to the negative electrode. Except for this, in the same way as in Example 7, the negative electrode was obtained as follows: the protective tape and the strip were disposed on the inner circumferential surface of the negative electrode as shown on the inner side of winding of the negative electrode as shown in FIG. 3. The protective tape was disposed on the outer circumferential surface of the negative electrode on the outer side of winding of the negative electrode as shown in FIG. 2B.

Moreover, in producing positive electrode 201, the amount of manganese dioxide contained as the positive-electrode active material was changed, resultingly changing the designed energy density to 930 Wh/L.

Using the positive electrodes 201 and negative electrodes produced in this way, five cylindrical lithium primary cells A8 were produced in the same way as in Example 1 except for the above, and were evaluated for their negative-electrode utilization rate in the same way.

### Comparative Example 1

The position of the negative-electrode lead connected to the negative electrode was changed from that of Example 1. That is, in the electrode body, the negative-electrode lead was disposed at a position in the third turn from the winding-start side. However, the electrode body was formed not to satisfy the above-described condition (II).

Five cylindrical lithium primary cells B1 were produced in the same way as in Example 1 except for the above, and were evaluated for their negative-electrode utilization rate in the same way.

### Comparative Example 2

The amount of manganese dioxide contained as the positive-electrode active material was changed from that of Comparative Example 1, resultingly producing cylindrical lithium primary cell B2 having a designed energy density of 850 Wh/L, in the same way as in Comparative Example 1 except for the above. Five cylindrical lithium primary cells B2 were produced and evaluated for their negative-electrode utilization rate in the same way.

### Comparative Example 3

The amount of manganese dioxide contained as the positive-electrode active material was changed from that of Example 1, resultingly producing cylindrical lithium primary cell B3 having a designed energy density of 700 Wh/L, in the same way as in Example 1 except for the above. Five cylindrical lithium primary cells B3 were produced and evaluated for their negative-electrode utilization rate in the same way.

### Comparative Example 4

The amount of manganese dioxide contained as the positive-electrode active material was changed from that of Comparative Example 1, resultingly producing cylindrical lithium primary cell B4 having a designed energy density of 700 Wh/L, in the same way as in Comparative Example 1 except for the above. Five cylindrical lithium primary cells B4 were produced and evaluated for their negative-electrode utilization rate in the same way.

### Comparative Example 5

The position of the negative-electrode lead connected to the negative electrode was changed from that of Example 1. That is, in the electrode body, the negative-electrode lead was disposed at a position at the outermost turn in the fifth turn from the winding-start side. However, the electrode body was formed to satisfy the above-described condition (II) as in the case of Example 1.

Five cylindrical lithium primary cells B5 were produced in the same way as in Example 1 except for the above, and were evaluated for their negative-electrode utilization rate in the same way.

### Comparative Example 6

The position of the negative-electrode lead connected to the negative electrode was changed from that of Example 1. That is, in the electrode body, the negative-electrode lead was disposed at a position at the outermost turn in the fifth turn from the winding-start side. Further, the electrode body was formed not to satisfy the above-described condition (II).

Five cylindrical lithium primary cells B6 were produced in the same way as in Example 1 except for the above, and were evaluated for their negative-electrode utilization rate in the same way.

### Comparative Example 7

The position of the negative-electrode lead connected to the negative electrode was changed from that of Example 1. That is, in the electrode body, the negative-electrode lead was disposed at a position at the innermost turn in the first turn from the winding-start side. However, the electrode body was formed to satisfy the above-described condition (II) as in the case of Example 1.

Five cylindrical lithium primary cells B7 were produced in the same way as in Example 1 except for the above, and were evaluated for their negative-electrode utilization rate in the same way.

### Comparative Example 8

The position of the negative-electrode lead connected to the negative electrode was changed from that of Example 1. That is, in the electrode body, the negative-electrode lead was disposed at a position at the innermost turn in the first turn from the winding-start side. Further, the electrode body was formed not to satisfy the above-described condition (II).

Five cylindrical lithium primary cells B8 were produced in the same way as in Example 1 except for the above, and were evaluated for their negative-electrode utilization rate in the same way.

In each of the cells of Examples 1-8 and Comparative Examples 1-8, the discharge capacity of the negative electrode was the same.

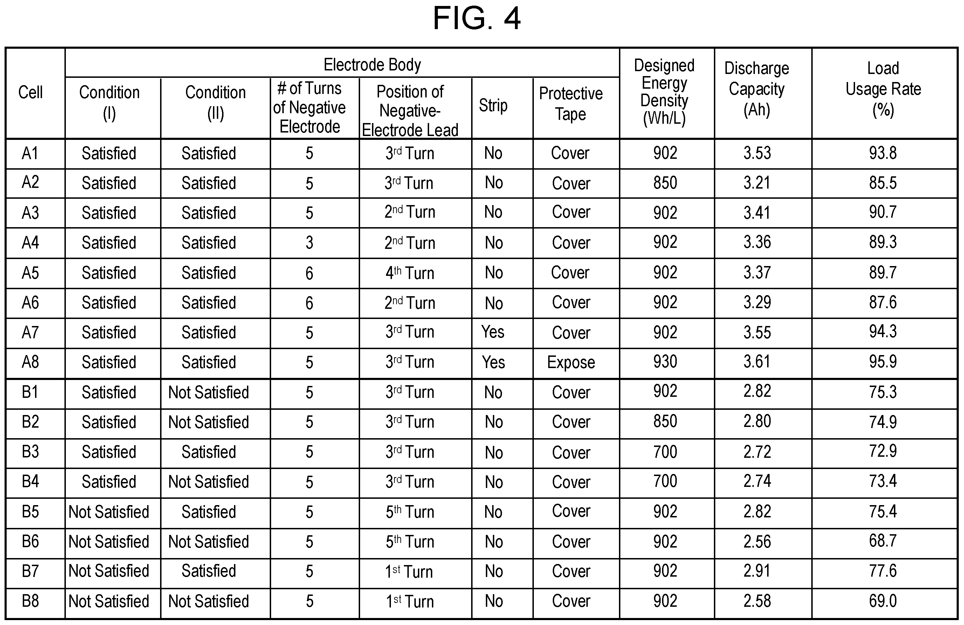

FIG. 4 shows the results of evaluation for the negative-electrode utilization rate. The following items for each cell are also shown in FIG. 4: the designed energy density, the discharge capacity measured when evaluating the negative-electrode utilization rate, whether or not to satisfy conditions (I) and (II), the number of turns of winding the negative electrode, the position of the negative-electrode lead, the presence or absence of the strip, and the state of how the protective tape is disposed on the outer circumferential surface of the negative electrode. In FIG. 4, the position of the negative-electrode lead is indicated as the number of turns on which the lead is disposed from the inner end on the winding-start side. The state of the protective tape disposed on the outer circumferential surface of the negative electrode is indicated as follows: The state is indicated as "cover" when the protective tape covers the portion (second portion) of the negative-electrode lead connected to the negative electrode on the outer circumferential surface of the negative electrode, as in the case of the arrangement of the inner circumferential surface shown in FIG. 2A. The state is indicated as "expose" when the protective tape covers only the portion of the negative-electrode lead protruding from the negative electrode and does not cover the second portion, on the outer circumferential surface of the negative electrode, as shown in FIG. 2B.

In comparison between cell B3 and cell B4 referring to FIG. 4 with the designed energy densities set to 700 Wh/L, no remarkable difference in their negative-electrode utilization rates is observed depending on whether or not condition (II) is satisfied. Further, their negative-electrode utilization rates are low at about 73%.

Concerning cells B1 and B2, since the amounts of the positive-electrode active materials contained were increased relative to that cell B4, the designed energy densities increase up to 902 Wh/L and 850 Wh/L. In this case, since the amounts of lithium, i.e., their positive-electrode active materials were not changed, it is expected that their negative-electrode utilization rates increase as the designed energy densities increase. For example, with respect to the negative-electrode utilization rate of 73.4% for cell B4, cell B1 is to theoretically have a negative-electrode utilization rate of about 73.4 × (902/700) = 94.6%. However, the actual negative-electrode utilization rate of cell B1 is about 75%, showing only a slight increase in the negative-electrode utilization rate. Accordingly, such an increase in the designed energy density results in only a slight increase in the capacity.

Moreover, in the case where, although condition (II) is satisfied, condition (I) is not satisfied, the results are as follows: Both cell B5 with the negative-electrode lead disposed at the outermost turn of the negative electrode and cell B7 with the negative-electrode lead disposed at the innermost turn of the negative electrode, show only a slight increase in their negative-electrode utilization rates with respect to that of cell B3. In the case where neither condition (I) nor (II) is satisfied, the results are as follows: Both cell B6 with the negative-electrode lead disposed at the outermost turn of the negative electrode and cell B8 with the negative-electrode lead disposed at the innermost turn of the negative electrode have their negative-electrode utilization rates decreased, contrary to that of cell B4.

In contrast, cells A1-A8 that satisfy conditions (I) and (II) have high negative-electrode utilization rates of 85% or higher while increasing their designed energy densities to 850 Wh/L or more. Further, cell A7 and cell A8 have remarkably high negative-electrode utilization rates. In cell A7, the strip is disposed on a region of the inner circumferential surface of the negative electrode where the innermost turn in the first turn on the winding-start side in the inner circumferential surface of the negative electrode. In cell A8, in addition to the strip, the protective tape is disposed on the outer circumferential surface of the negative electrode such that the protective tape covers only the portion of the negative-electrode lead protruding from the negative electrode while exposing the negative electrode being at the outer circumferential surface.

### INDUSTRIAL APPLICABILITY

A lithium primary cell according to the present disclosure is suitable for use in driving equipment for long periods of time. The lithium primary cell according to the present disclosure is applicable to meters for gas, city water, and the like, for example.

### REFERENCE MARKS IN THE DRAWINGS

10 lithium primary cell
100 cell can
100A cylinder portion of the cell can
100A1 opening of the cell can
100A2 opening on the opposite side of the cell can
100B bottom portion closing the cell can
200 electrode body
201 positive electrode
202 negative electrode
202A inner circumferential surface of the negative electrode
202B outer circumferential surface of the negative electrode
203 separator
204 electrolyte
210 internal lead (negative-electrode lead)
210A inner circumferential surface of the internal lead (negative-electrode lead)
210B outer circumferential surface of the internal lead (negative-electrode lead)
211 first portion
212 second portion
220 internal lead (positive-electrode lead)
230A upper insulating plate
230B lower insulating plate
240 protective tape covering inner circumferential surface 210A of the negative-electrode lead, and also covering inner circumferential surface 202A of the negative electrode
241 protective tape covering outer circumferential surface 210B of the negative-electrode lead while exposing outer circumferential surface 202B of the negative electrode
242 protective tape covering outer circumferential surface 210B of the negative-electrode lead, and also covering outer circumferential surface 202B of the negative electrode
250 strip
300 sealing plate
310 insulating gasket
330 external terminal

## Claims

1. A lithium primary cell comprising:
an electrode body including a positive electrode, a negative electrode, and a separator that are wound spirally about a first center axis such that the positive electrode and the negative electrode are laminated on each other via the separator disposed between the positive electrode and the negative electrode, and the negative electrode has a first surface facing the positive electrode;
a negative-electrode lead attached on the first surface of the negative electrode and electrically connected to the negative electrode, the negative-electrode lead covering a part of the first surface of the negative electrode; and
a protective tape covering a part of the negative-electrode lead, the protective tape being wider than the negative-electrode lead,
wherein an outermost turn of the electrode body constitutes the positive electrode,
wherein the negative electrode is wound more than two turns in the electrode body,
wherein the negative-electrode lead is disposed neither on an innermost turn of the negative electrode nor on an outermost turn of the negative electrode,
wherein a first straight line, a second straight line, and a third straight line are defined on a cross section of the electrode body perpendicular to the center axis, the fist straight line passing through the center axis and a center of the protective tape, the second straight line being parallel with the first straight line and passing through one end of the protective tape, the third straight line being parallel with the first straight line and passing through another end of the protective tape, an end of an outermost turn of the positive electrode being located in a region of the cross section provided between the second straight line and the third straight line,
wherein the protective tape is located between the center axis and the end of the outer turn of the positive electrode, and
wherein a designed energy density of the lithium primary cell is 850 Wh/L or more.

2. The lithium primary cell according to claim 1,
wherein the negative electrode further has a second surface opposite to the first surface, and
wherein the protective tape does not cover a portion of the second surface of the negative electrode opposite to a portion of the first surface of the negative electrode on which the negative-electrode lead is attached.

3. The lithium primary cell according to claim 1 or 2, further comprising
a strip disposed between the negative electrode and the separator, the strip covering a portion of the negative electrode,
wherein the strip is disposed on an inner circumferential surface of the innermost turn of the negative electrode.

4. The lithium primary cell according to claim 1 or 2, wherein a negative-electrode utilization rate of the negative electrode is 85% or more.
